# EUROPÄISCHE PATENTSCHRIFT

(11) **EP 2 809 014 B1**
(45) Veröffentlichungstag und Bekanntmachung des Hinweises auf die Patenterteilung: **11.10.2017**
(21) Anmeldenummer: 14168596.6
(22) Anmeldetag: 16.05.2014
(51) Int. Cl.: H04B 3/54, H04L 25/08

(54) **Verfahren und Vorrichtung zum Feststellen von Störkomponenten**
Method and device for detecting disturbing components
Procédé et dispositif de détermination de composants perturbants

(30) Priorität: 31.05.2013 DE 102013105626
(43) Veröffentlichungstag der Anmeldung: 03.12.2014
(73) Patentinhaber: Devolo AG, 52068 Aachen (DE)
(72) Erfinder: Weling, Nico, 4700 Eupen (BE)
(74) Vertreter: Cohausz & Florack

(56) Entgegenhaltungen:
- WO-A1-2011/154087
- DE-A1-102011 052 734

## Beschreibung

Der Gegenstand betrifft ein Verfahren und eine Vorrichtung zum Durchführen einer Datenkommunikation über mindestens eine Stromleitung eines Stromversorgungsnetzes unter Verwendung von mindestens einem Frequenzband.

Powerline Kommunikation (PLC) ist eine Technologie, bei der Daten über Energieversorgungsnetze bzw. Stromversorgungsnetze übertragen werden. Ein Energieversorgungsnetz kann dabei die hausinterne Niederspannungsinstallation ebenso sein, wie das Versorgungsnetz außerhalb des Hauses, oder die Mittel- und Hochspannungsleitungen in den großen Verbundnetzen der Energieversorger.

Die PLC moduliert dazu die zu übertragenen Daten als Hochfrequenzsignal auf die elektrischen Leitungen des Energieversorgungsnetzes. Die dabei verwendeten Frequenzen liegen in aktuellen, technischen Implementierungen im Bereich zwischen 90kHz und 100MHz, wobei dieser Frequenzbereich auch noch nach oben und/oder unten erweitert werden kann. Die Hochfrequenzsignale werden dabei von den derzeit standardmäßig verlegten Kupferleitungen geführt.

Ein stetiges Anliegen bei PLC ist es, der steigenden Nachfrage nach höheren Datenraten gerecht zu werden. Hierzu wird neben einer Erweiterung der Frequenzbereiche insbesondere der Sendepegel, also die Sendeleistung, bei PLC Vorrichtungen erhöht.

Es hat sich jedoch gezeigt, dass durch höhere Sendepegel bzw. höhere Sendeleistungen Störkomponenten auftreten können. Insbesondere treten in anderen Nutzfrequenzbändern, also Nutzfrequenzbändern, die nicht für eine PLC Datenkommunikation Verwendung finden, wie dem FM Frequenzband, Störkomponenten auf. Untersuchungen haben gezeigt, dass es sich bei diesen Störkomponenten um Intermodulationsprodukte handeln kann.

So kann es vorkommen, dass das PLC Spektrum an einem nichtlinearen Bauelement, welches in dem Stromversorgungsnetz angeordnet ist, gespiegelt wird. Mit anderen Worten treten Intermodulationsprodukte auf. Die Spiegelung des PLC Spektrums führt insbesondere dazu, dass sich das Rauschen, also der Rauschboden, beispielsweise in dem FM Frequenzband erhöht. Folge hiervon kann eine Störung von Radiosendern sein.

Die Internationale Patentanmeldung WO 2011/154087 A1 offenbart ein Verfahren zum Betreiben eines PLC-Systems, das mindestens ein PLC-Modem umfasst, wobei Störungen auf den Übertragungssignalen des PLC-Systems und / oder auf einem Übertragungsspektrum des PLC-Systems erfasst werden, und wobei die Interferenzen durch Einflüsse eines Impedanzmodulationsgerätes, welches an Leitungen des PLC-System angeschlossen sind, verursacht werden.

Aus den zuvor aufgezeigten Nachteilen lag dem vorliegenden Gegenstand die Aufgabe zugrunde, ein Verfahren und eine Vorrichtung zur Verfügung zu stellen, welche/s Störkomponenten in anderen Nutzfrequenzbändern zumindest reduziert und gleichzeitig eine grundsätzliche Steigerung der Sendeleistung erlaubt.

Diese Aufgabe wird gegenständlich gelöst durch ein Verfahren umfassend:
- Durchführen einer Kommunikation über mindestens eine Stromleitung eines Stromversorgungsnetzes unter Verwendung von mindestens einem Frequenzband;
- Festellen, ob während mindestens einer ersten Stromnetzperiode eine Störkomponente in einem Signal eines Überwachungsfrequenzbands aufgetreten ist;
- wobei das Frequenzband sich von dem Überwachungsfrequenzband unterscheidet;
- Bestimmen mindestens einer Auftrittszeitdauer der zumindest einen Störkomponente während der ersten Stromnetzperiode; und
- Absenken einer Sendeleistung in mindestens einem Frequenzband zumindest für die bestimmte Auftrittszeitdauer in mindestens einer nachfolgenden Stromnetzperiode.

Darüber hinaus wird die Aufgabe gegenständlich gelöst durch eine Vorrichtung, umfassend:
- erste Kommunikationsmittel zum Durchführen einer Kommunikation über mindestens eine Stromleitung eines Stromversorgungsnetzes unter Verwendung von mindestens einem Frequenzband;
- Detektionsmittel zum Festellen, ob während mindestens einer ersten Stromnetzperiode eine Störkomponente in einem Signal eines Überwachungsfrequenzbands aufgetreten ist;
- wobei das Frequenzband sich von dem Überwachungsfrequenzband unterscheidet;
- Bestimmungsmittel zum Bestimmen mindestens einer ersten Auftrittszeitdauer der zumindest einen Störkomponente während der ersten Stromnetzperiode; und
- Mittel zum Absenken einer Sendeleistung in mindestens einem Frequenzband zumindest für die bestimmte Auftrittszeitdauer in mindestens einer nachfolgenden Stromnetzperiode.

Schließlich wird die Aufgabe durch ein System umfassend die zuvor genannte Vorrichtung und mindestens eine weitere zuvor genannte Vorrichtung gelöst.

Indem die Auftrittszeitdauer von einer Störkomponente innerhalb einer ersten Stromnetzperiode bestimmt wird und in mindestens einer nächsten Stromnetzperiode eine Sendeleistung zumindest für die bestimmte Auftrittszeitdauer gesenkt wird, können Störkomponenten, wie Intermodulationsprodukte, in anderen Nutzfrequenzbändern reduziert werden ohne die gesamte Sendeleistung dauerhaft zu reduzieren. Insbesondere ist eine indirekte Detektion von Störkomponenten hierdurch möglich.

Die Vorrichtung kann beispielsweise in einer PLC Vorrichtung, wie ein PLC Modem, angeordnet sein oder eine PLC Vorrichtung, wie ein PLC Modem, darstellen. Die Kommunikation kann beispielsweise eine Datenkommunikation sein oder (lediglich) das Aussenden eines Testträgers umfassen. Die Datenkommunikation über die Stromleitungen kann beispielsweise bidirektional erfolgen, d.h. die Kommunikationsmittel können mit Empfangsmitteln Signale empfangen. Ferner können die Kommunikationsmittel beispielsweise Sendemittel zum Senden von Signalen in zumindest einem Frequenzband einer Mehrzahl von Frequenzbändern umfassen.

Die Datenkommunikation kann auf einem Frequenzmultiplexverfahren beruhen, wie beispielsweise einem OFDM-Verfahren, wobei eine Mehrzahl von Signalen in einer Mehrzahl von verschiedenen Frequenzbändern übertragen wird. Beispielsweise kann genau ein Signal jeweils einem Frequenzband zugeordnet sein, wobei jedes Signal eine bestimmte Bandbreite im Frequenzbereich aufweisen kann und beispielsweise einer Trägerfrequenz zugeordnet ist. Wird beispielsweise eine OFDM-Modulation verwendet, so können die Empfangsmittel Fourier-Transformationsmittel umfassen, um die auf den einzelnen Trägern aufmodulierten Signale vom empfangenen Gesamtsignal zu extrahieren.

Zunächst kann eine Kommunikation, insbesondere eine Datenkommunikation, also eine PLC Datenkommunikation, über ein Stromversorgungsnetz durchgeführt werden. Bei dem Stromversorgungsnetz kann es sich insbesondere um eine hausinterne Niederspannungsinstallation handeln, welche weitere lineare und nichtlineare Bauelemente umfassen kann. Mindestens ein Frequenzband, also PLC Frequenzband, vorzugsweise eine Mehrzahl dieser Frequenzbänder, kann für die Datenkommunikation verwendet werden. Eine Vorrichtung kann hierzu geeignete Kommunikationsmittel zum Senden und/oder Empfangen von Signalen aufweisen.

Erfindungsgemäß ist festgestellt worden, dass die Störkomponenten beispielsweise in einem FM Frequenzband periodisch auftreten, insbesondere synchron mit der Stromnetzperiode. Bei einer in Europa üblichen Stromnetzfrequenz von 50 Hz beträgt die Stromnetzperiode 20 ms. Es versteht sich, dass die Stromnetzfrequenz (z.B. 60 Hz) und damit die Stromnetzperiode auch andere Werte aufweisen können.

Erfindungsgemäß wird festgestellt, ob eine Störkomponente in einem Überwachungsfrequenzband während einer ersten Stromnetzperiode aufgetreten ist. Das Überwachungsfrequenzband unterscheidet sich von dem Frequenzband, welches für die PLC Datenkommunikation eingesetzt wird. Insbesondere kann es sich bei dem Überwachungsfrequenzband um ein nicht für die PLC Datenkommunikation verwendetes Frequenzband handeln. In mindestens einem Signal des Überwachungsfrequenzbandes kann mittels Detektionsmittel eine Störkomponente festgestellt werden.

Wird eine Störkomponente oder eine Mehrzahl von Störkomponenten festgestellt, wird die Auftrittszeitdauer, insbesondere die Start- und Endzeit, von jeder der festgestellten Störkomponenten innerhalb der ersten Stromnetzperiode bestimmt. Insbesondere können Bestimmungsmittel vorgesehen sein, die eingerichtet sind, in Abhängigkeit der Stromnetzperiode die Auftrittszeitdauer, insbesondere die jeweilige Start- und Endzeit, einer Störkomponente zu bestimmen. Mit anderen Worten stellt die Stromnetzperiode die Zeitbasis des vorliegenden Verfahrens dar.

In mindestens einer nachfolgenden Stromnetzperiode, vorzugsweise in sämtlichen nachfolgenden Stromnetzperioden ab zumindest einer ersten nachfolgenden Stromnetzperiode, wird mindestens eine Sendeleistung in dem mindestens einem Frequenzband zumindest für die eine bestimmte Auftrittszeitdauer abgesenkt. Vorzugsweise wird die Sendeleistung im Wesentlichen (ausschließlich) während der bestimmten Auftrittszeitdauer, also zwischen der Startzeit und der Endzeit, abgesenkt. Durch die Absenkung der Sendeleistung (nur) während der Auftrittszeit einer Störkomponente kann diese im Wesentlichen beseitigt werden, ohne dass die Sendeleistung insgesamt während der gesamten Stromnetzperiode abgesenkt werden muss.

Die Vorrichtung kann insbesondere Mittel zum Absenken der Sendeleistung aufweisen. Beispielsweise kann das Absenken der Sendeleistung in dem zumindest einem Frequenzband das Unterlassen des Sendens in dem zumindest einem Frequenzband und/oder das Filtern eines Sendesignals in dem zumindest einem Frequenzband zumindest während der bestimmten Auftrittszeit umfassen.

Gemäß einer ersten Ausführungsform des vorliegenden Verfahrens kann bei der Bestimmung der Auftrittszeitdauer einer Störkomponente die Amplitude des Signals in dem Überwachungsfrequenzband erfasst werden. In Abhängigkeit eines vordefinierten Grenzwerts und der erfassten Amplitude kann zumindest die Störkomponente festgestellt werden. Indem als Kriterien zum Feststellen einer Störkomponente die Amplitude des mindestens einen überwachten Signals und ein vorgebbarer Grenzwert ausgewertet werden, kann eine Störkomponente schnell und sicher detektiert werden.

Ferner wird gemäß einer Ausführungsform des vorliegenden Verfahrens vorgeschlagen, dass die Stromnetzperiode in eine Vielzahl von m-Zeitspannen unterteilt wird. Die Zeitspannen können insbesondere eine gleiche Länge Δt aufweisen und beispielsweise der Dauer eines Symbols entsprechen. Es versteht sich, dass auch andere Einteilungen vorgenommen werden können.

Vorzugsweise kann für mindestens eine dieser m-Zeitspannen, insbesondere für jede dieser Zeitspannen, eine Amplitude des Signals in dem Überwachungsfrequenzband erfasst werden. Mittels der mindestens einen Amplitude, insbesondere der Vielzahl der Amplituden, und mindestens einem vordefinierten Grenzwert kann eine Störkomponente festgestellt werden. Beispielsweise kann ein Amplitudengrenzwert vorgesehen. Überschreitet die Amplitude diesen Grenzwert, so liegt zumindest in dieser Zeitspanne eine Störkomponente vor. Alternativ kann bevorzugt über sämtliche erfassten Amplituden eine Differenzierungsoperation ausgeübt werden. Überschreiten die resultierenden Werte einen vordefinierten Grenzwert, so liegt eine starke Steigung vor und eine Störkomponente kann detektiert werden. Andernfalls liegt keine Störkomponente vor.

Vorzugweise kann die Auftrittszeitdauer einer Störkomponente bestimmt werden, indem zumindest die erste Zeitspanne, in der die Störkomponente auftritt, als Startzeit und die letzte Zeitspanne, in der die Störkomponente auftritt, als Endzeit der Störkomponente bestimmt wird. In einfacher Weise kann die Auftrittszeitdauer einer Störkomponente innerhalb einer Stromnetzperiode bestimmt werden.

Gemäß einer weiteren Ausführungsform schlägt die Erfindung vor, dass die Stromnetzperiode in eine Vielzahl von m-Zeitspannen unterteilt wird und für das mindestens eine Frequenzband für mindestens eine der m-Zeitspannen der Stromnetzperiode ein Absenkungsfaktor in Abhängigkeit der mindestens einen bestimmten Auftrittszeitdauer bestimmt wird. Der Absenkungsfaktor kann in einem einfachen Fall lediglich zwei Werte annehmen oder eine beliebige Anzahl von Werten zwischen einem oberen Grenzwert und einem unteren Grenzwert einnehmen. Wenn der Absenkungsfaktor beispielsweise 1 ist, erfolgt keine Absenkung der Sendeleistung. Wenn der Absenkungsfaktor beispielsweise 0 ist, wird keine Leistung ausgesendet. Bei einem Absenkungsfaktor von 0,5 wird die Sendeleistung beispielsweise halbiert. Es versteht sich, dass der Absenkungsfaktor auch nahezu kontinuierlich zwischen einem oberen und einem unteren Grenzwert eingestellt werden kann. Vorzugsweise kann die Absenkung der Sendeleistung in einem Wertebereich von 0 dB bis 50 dB, vorzugweise von 0 dB bis 30 dB, liegen.

Insbesondere kann für jede der m-Zeitspannen ein Absenkungsfaktor für bevorzugt jedes der PLC Frequenzbänder festgelegt und beispielsweise in einer Absenkungsfaktortabelle gespeichert werden. Diese Tabelle kann in einer PLC Vorrichtung gespeichert werden. Die Mittel zum Absenken der Sendeleistung können die Sendeleistung in der PLC Vorrichtung dann entsprechend der Absenkungsfaktortabelle in jeder Stromnetzperiode absenken. In einfacher Weise können Störkomponenten in anderen Nutzfrequenzbändern verhindert werden.

Grundsätzlich kann der Absenkungsfaktor vordefiniert sein. Vorzugsweise ist es gemäß einer Ausführungsform des vorliegenden Verfahrens vorgesehen, dass der mindestens eine Absenkungsfaktor individuell in Abhängigkeit der jeweiligen festgestellten Störkomponente bestimmt wird. Vorteil einer individuellen Bestimmung in Abhängigkeit der jeweiligen Störkomponente ist, dass die Höhe der Absenkung derart festgelegt werden kann, dass die Störkomponente in dem zu schützenden Nutzfrequenzband beseitigt wird, ohne dass hierbei die Sendeleistung stärker als notwendig abgesenkt wird. Das Nutzfrequenzband ist insbesondere ein Frequenzband, welches vor Störungen geschützt werden soll und welches nicht zur PLC Kommunikation oder für einen Testträger eingesetzt wird. Vorzugsweise kann die quantitative Differenz zwischen der erfassten Amplitude der Störkomponente und des vordefinierten Grenzwerts bestimmt werden. In Abhängigkeit der bestimmten quantitativen Differenz kann der mindestens eine Absenkungsfaktor bestimmt werden. Insbesondere kann für jede der m-Zeitspannen einer Störkomponente der Absenkungsfaktor (individuell) bestimmt, beispielsweise berechnet werden. Es kann auch vorgesehen sein, dass eine Zuordnungstabelle in der PLC Vorrichtung abgelegt wird, die vordefinierte Zuordnungen zwischen potentiellen quantitativen Differenzwerten und zugehörigen Absenkungsfaktoren aufweist. In einfacher Weise kann dann aus dem bestimmten quantitativen Differenzwert der zugehörige Absenkungsfaktor bestimmt werden.

Gemäß einer weiteren Ausführungsform des vorliegenden Verfahrens kann das Überwachungsfrequenzband in Abhängigkeit eines nicht zur PLC Kommunikation verwendeten Nutzfrequenzbandes gewählt werden. Insbesondere unterscheidet sich das Überwachungsfrequenzband von dem zu schützenden Nutzfrequenzband. Das zu schützende Nutzfrequenzband, wie das FM Frequenzband, kann außerhalb des für die PLC Kommunikation benutzten Frequenzspektrums liegen. Es ist erkannt worden, dass Störkomponenten in diesen Nutzfrequenzbändern detektiert werden können, wenn die Frequenzen f_{UE} des Überwachungsfrequenzbandes zu den Frequenzen f_{NU} des Nutzfrequenzbandes folgende Beziehung zueinander aufweisen: f_{UE} = (1/n) * f_{NU} mit n=1, ...N. Hierdurch ist es möglich, ein insbesondere nicht für die PLC Datenkommunikation verwendetes Frequenzband, welches jedoch innerhalb des PLC Spektrums liegt, als Überwachungsfrequenzband zu nutzen, um ein außerhalb des PLC Spektrums liegendes Nutzfrequenzband zu schützen.

Grundsätzlich kann das vorliegende Verfahren vor der Inbetriebnahme der PLC Vorrichtung durchgeführt werden und/oder während des laufenden Betriebs der PLC Vorrichtung. Beispielsweise kann eine Mehrzahl von Feldtests mit verschiedenen Szenarien, also mit verschiedenen im Stromversorgungsnetz angeordneten Bauelementen, die potentiell eine Störkomponente hervorrufen können, durchgeführt werden. Wie zuvor beschrieben wurde, können diese Tests dann ausgewertet und eine Master-Absenkungsfaktortabelle für jede PLC Vorrichtung erstellt werden. Die Master-Absenkungsfaktortabelle kann dann werkseitig insbesondere änderbar in einem Speichermittel der PLC Vorrichtung abgespeichert werden.

Gemäß einer weiteren Ausführungsform kann das Festellen, ob während mindestens einer ersten Stromnetzperiode eine Störkomponente in einem Signal eines Überwachungsfrequenzbands aufgetreten ist, von einer PLC-Vorrichtung während dem laufenden Betrieb durchgeführt werden. Das Überwachungsfrequenzband kann ein im PLC Frequenzspektrum nicht genutztes Frequenzband sein. Insbesondere verfügen PLC Vorrichtungen über einen Bandpass, der das PLC Nutzfrequenzband selektiert. Beispielsweise kann die Amplitude von einem ungenutzten Träger am Ende des gefilterten Frequenzbands als Überwachungsfrequenzband genutzt werden. Alternativ oder zusätzlich kann ein Notch im Frequenzband zum Feststellen, ob eine Störkomponente vorliegt, verwendet werden. In einfacher Weise kann im laufenden Betrieb einer PLC Vorrichtung festgestellt werden, ob eine Störkomponente in einem Nutzfrequenzband auftritt. Wie zuvor beschrieben wurde, kann im laufenden Betrieb dann mindestens ein Absenkungsfaktor, vorzugsweise eine Absenkungsfaktortabelle, erstellt werden.

Darüber hinaus kann gemäß einer weiteren Ausführungsform des vorliegenden Verfahrens vorgesehen sein, dass das Überwachungsfrequenzband ein im PLC Frequenzspektrum für die Datenkommunikation genutztes Frequenzband ist. Zum Feststellen einer Störkomponente kann das Signal-zu-Rauschverhältnis des Signals in dem für die Datenkommunikation genutzten Frequenzband erfasst werden. So ist es möglich, dass Intermodulationsprodukte auch auf einem oder mehreren für die Datenkommunikation genutzten Träger/n auftreten und insbesondere detektierbar sind.

Beispielsweise kann ein Signal-zu-Rauschverhältnis (SNR) für mindestens ein empfangenes Signal ermittelt werden. Insbesondere können während einer Stromnetzperiode eine Mehrzahl von SNR-Werten des Signals erfasst werden. Die Erfassung kann analog zu der Erfassung einer Amplitude erfolgen, so dass auf die obigen Ausführungen verwiesen wird. Das Feststellen, ob ein empfangenes Signal während einer Stromnetzperiode eine Störkomponente aufweist, kann beispielsweise auf einem Vergleich basieren, bei dem der mindestens eine SNR Wert für mindestens ein Signal mit einem vordefinierten Grenzwert verglichen wird. Wird dieser vordefinierte Grenzwert für ein empfangenes Signal unterschritten, so wird beispielsweise eine Störkomponente festgestellt. Das Feststellen der Störkomponente kann jedoch auch mit mindestens einem weiteren Kriterium verknüpft sein. Ferner kann, wie oben im Zusammenhang mit der Amplitude beschrieben, die Auftrittszeitdauer der Störkomponente bestimmt werden.

Der vorgegebene Grenzwert kann beispielsweise durch eine Adaption ermittelt werden, wobei dieser vorgegebene Grenzwert beispielsweise ein SNR-Wert ist, welcher unter einem SNR-Wert eines nicht gestörten oder nur geringfügig gestörten empfangenen Signals liegt. Hierbei kann beispielsweise die Tatsache berücksichtigt werden, dass das SNR eines gestörten empfangenen Signals unterhalb des SNRs eines nicht gestörten empfangenen Signals liegt.

Gemäß einer weiteren Ausführungsform kann der mindestens eine Absenkungsfaktor in einem Speichermittel in einer PLC Vorrichtung gespeichert werden. Insbesondere kann eine Absenkungsfaktortabelle umfassend eine Mehrzahl von Absenkungsfaktoren vorzugsweise änderbar gespeichert werden. Der mindestens eine Absenkungsfaktor kann während des Betriebs der PLC-Vorrichtung in vorgebbaren Zeiträumen aktualisiert werden. Beispielsweise kann bei Feststellung einer neuen Störkomponente, beispielsweise aufgrund eines neu in das Stromversorgungsnetz eingefügten nichtlinearen Bauelements, zumindest zur Reduzierung dieser Störkomponente der mindestens eine Absenkungsfaktor, bevorzugt der mindestens eine Absenkungsfaktor der Absenkungsfaktortabelle, entsprechend angepasst werden. Hierdurch kann auch während des Betriebs der PLC Vorrichtung auf Änderungen im Aufbau des Stromversorgungsnetzes derart reagiert werden, dass evtl. neue Störkomponenten zeitnah in einfacher Weise erfasst und zumindest reduziert werden können.

In einer bevorzugten Ausführungsform des vorliegenden Verfahrens kann zum Feststellen einer neuen Störkomponente während einer vorgebbaren Stromnetzperiode mindestens ein niederfrequenter Testträger erzeugt werden. Unter einem niederfrequenten Testträger ist insbesondere ein Signal zwischen 100 kHz und 10 MHz, bevorzugt zwischen 1 MHz und 5 MHz, insbesondere von 3 MHz zu verstehen. Zumindest die erste Oberwelle des Testträgers kann zum Festellen einer Störkomponente und zum Bestimmen einer Auftrittszeitdauer überwacht werden. Eine Oberwelle ist hierbei ein Intermodulationsprodukt. Beispielsweise liegt die erste Oberwelle eines Testträgers von 3 MHz bei 6 MHz. Der Vorteil eines Testträgers von 3 MHz und der Überwachung der ersten Oberwelle bei 6 MHz ist, dass das ohnehin ungenutzte Amateurfunkfrequenzband als Überwachungsfrequenzband genutzt werden kann. Es versteht sich, dass auch ein Testträger erzeugt werden kann, dessen erste Oberwelle in einem zur PLC Datenkommunikation genutzten Frequenzspektrum liegen kann. Dann kann insbesondere durch Auswerten des SNR des Signals in dem zur PLC Datenkommunikation genutzten Frequenzspektrum eine Störkomponente festgestellt werden, wie zuvor beschrieben wurde.

Intermodulationsprodukte schwächen sich zudem von Oberwelle zu Oberwelle ab. Indem die erste Oberwelle überwacht wird, kann eine Störkomponente sicher festgestellt werden. Gleichzeitig stellt ein niederfrequenter Testträger sicher, dass auch im Falle von einem detektierten Intermodulationsprodukt keine nennenswerten Störungen im FM Frequenzband erzeugt werden, da die Oberwellen bis dahin deutlich abgeschwächt sind. Bei Feststellung einer Störkomponente kann mindestens ein Absenkungsfaktor aktualisiert werden. Insbesondere kann mindestens ein in der Absenkungsfaktortabelle änderbar gespeicherter Absenkungsfaktor angepasst werden.

Bei Verwendung eines niederfrequenten Testträgers kann durch Testträgererzeugungsmittel der niederfrequente Testträger bevorzugt in jeder Stromnetzperiode erzeugt werden. Grund hierfür ist, dass auch im Falle von einem detektierten Intermodulationsprodukt keine nennenswerten Störungen im FM Frequenzband erzeugt wird. Gleichzeitig kann hierdurch zeitnah eine Störkomponente detektiert werden. Es versteht sich, dass der Testträger bei anderen Varianten der vorliegenden Erfindung lediglich in vorgebbaren Zeiträumen, beispielsweise nur in jeder n-ten Stromnetzperiode, erzeugt werden kann. Dies kann den Rechenaufwand der Überwachung reduzieren. Es versteht sich weiterhin, dass ein Testton nicht zwingend während der gesamten Netzperiode gesendet und detektiert werden muss. So kann dieser Testton beispielsweise mit jedem n-ten Symbol übertragen werden. In diesem Fall belegt der Testton nur 1/n der Sendezeit dieses Trägers.

Das Stromversorgungsnetz kann zwei oder mehr PLC Vorrichtungen, wie PLC Modems, aufweisen. Es ist erkannt worden, dass Störkomponenten sicher und effizient reduziert werden können, wenn die Mehrzahl von PLC Vorrichtungen beispielsweise von einem hausinternen Niederspannungsnetzes miteinander gekoppelt sind und vorzugsweise gemeinsam das Verfahren durchführen. Gemäß einer bevorzugten Ausführungsform des vorliegenden Verfahrens kann der mindestens eine gespeicherte Absenkungsfaktor an mindestens eine weitere PLC Vorrichtung gesendet werden. Alternativ oder zusätzlich kann mindestens ein Absenkungsfaktor von mindestens einer weiteren PLC Vorrichtung empfangen werden. Der empfangene Absenkungsfaktor kann in dem Speichermittel abgespeichert werden. Beispielsweise kann eine Aktualisierung des mindestens einen gespeicherten Absenkungsfaktors durchgeführt werden.

Darüber hinaus kann in einer weiteren Ausführungsform des vorliegenden Verfahrens vorgesehen sein, dass bei Feststellung einer Störkomponente jede der mindestens zwei PLC Vorrichtungen die Sendeleistung zumindest in dem Frequenzband absenkt. Alternativ oder zusätzlich kann vorgesehen sein, dass ausschließlich in einer der zumindest zwei PLC Vorrichtungen die Sendeleistung zumindest in dem Frequenzband abgesenkt wird. Alternativ oder zusätzlich kann vorgesehen sein, dass die Sendeleistung nur in der/die PLC Vorrichtung/en abgesenkt wird, in der/denen die Störkomponente festgestellt wurde. Je nach Anforderung an das PLC Netz (höhere Datenrate oder höherer Schutz für z.B. Radiosender) kann eine der zuvor genannten Optionen implementiert werden. Insbesondere kann jede PLC Vorrichtung zur Durchführung der Optionen Steuerungsmittel aufweisen.

Bei einem Stromversorgungsnetz mit zwei oder mehr PLC Vorrichtungen, wie PLC Adaptern, kann das Senden und Empfangen von mindestens einem Absenkungsfaktor über ein Management Protokoll durchgeführt werden. Insbesondere können so genannte MMEs (Management Message Entities) zwischen PLC Vorrichtungen ausgetauscht werden. Mittels dieser MMEs kann der mindestens eine Absenkungsfaktor, vorzugsweise die Absenkungsfaktortabelle, zwischen den PLC Vorrichtungen ausgetauscht werden. Welche Vorrichtung die Sendeleistung reduziert ist ggf. eine Konfigurationsoption. Für einen maximalen Schutz kann vorgesehen sein, dass sämtliche PLC Vorrichtungen die Sendleistung absenken. Für eine maximale PLC-Datenrate kann vorgesehen sein, dass die Sendeleistung nur dann reduziert wird, wenn an den mindestens zwei PLC Vorrichtungen Störkomponenten festgestellt worden sind. Auch kann vorgesehen sein, dass nur die Vorrichtung, an der eine Störkomponente gemessen wurde, seinen Sendepegel reduziert. Mit anderen Worten können die PLC Vorrichtungen beispielsweise ODER oder UND verknüpft sein. Zur Steuerung einer Mehrzahl von PLC Vorrichtungen kann eine PLC Vorrichtung Steuerungsmittel aufweisen.

Die Erfindung wird im Folgenden anhand von Ausführungsbeispiele zeigenden Zeichnungen näher erläutert.

In den Figuren zeigen:
- Fig. 1: ein exemplarisches Verfahren gemäß einem ersten Ausführungsbeispiel;
- Fig. 2: eine exemplarische Vorrichtung gemäß einem ersten Ausführungsbeispiel;
- Fig. 3: ein beispielhafter Amplitudenverlauf eines Signals innerhalb einer Stromnetzperiode;
- Fig. 4a: ein beispielhaftes Frequenzspektrum ohne Anwendung eines Ausführungsbeispiels eines erfindungsgemäßen Verfahrens;
- Fig. 4b: das beispielhafte Frequenzspektrum gemäß Fig. 4a bei Anwendung eines Ausführungsbeispiels eines erfindungsgemäßen Verfahrens;
- Fig. 5: ein beispielhaftes Frequenzspektrum mit einer Mehrzahl von Signalen; und
- Fig. 6: ein weiteres beispielhaftes Frequenzspektrum mit einer Mehrzahl von Signalen.

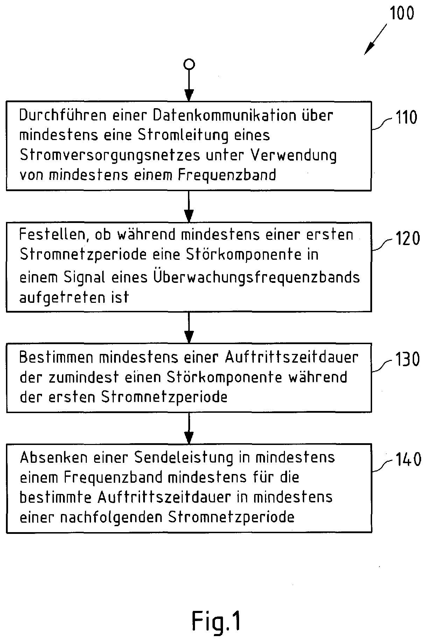

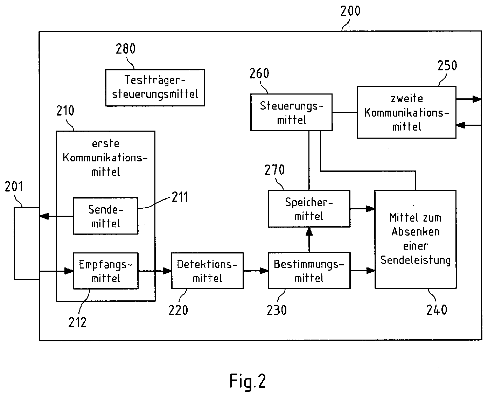

Figur 1 zeigt ein exemplarisches Verfahren 100 gemäß einem ersten Ausführungsbeispiel. Dieses exemplarische Verfahren 100 wird im Folgenden zusammen mit der in Figur 2 dargestellten exemplarischen Vorrichtung 200 gemäß einem ersten Ausführungsbeispiel erläutert. Hierbei umfasst die Vorrichtung 200 optionale Komponenten.

Das Verfahren umfasst das Durchführen einer Kommunikation, insbesondere einer Datenkommunikation, über mindestens eine Stromleitung eines Stromversorgungsnetzes unter Verwendung von mindestens einem Frequenzband, wie exemplarisch in Schritt 110 dargestellt. Alternativ oder zusätzlich zu einer Datenkommunikation kann auch nur ein Testträger gesendet werden. Insbesondere kann die Datenkommunikation unter Verwendung einer Mehrzahl von Frequenzbändern durchgeführt werden. Das Stromversorgungsnetz kann mindestens ein nichtlineares Bauteil aufweisen, welches Störkomponenten in anderen Nutzfrequenzbändern verursachen kann.

Diese Datenkommunikation kann durch die in Figur 2 dargestellten ersten Kommunikationsmittel 210 der Vorrichtung 200 vorgenommen werden, wobei die ersten Kommunikationsmittel 210 beispielsweise Empfangsmittel 212 zum Empfangen eines oder mehrerer Signals/e von einem Anschluss 201 aufweisen, wobei ein Eingang der Empfangsmittel 212 mit dem Anschluss 201 verbunden ist. Die ersten Kommunikationsmittel 210 können ferner beispielsweise Sendemittel 211 zum Senden eines oder mehrerer Signals/e umfassen, wobei die Sendemittel 211 einen mit dem Anschluss 201 verbundenen Ausgang zum Übertragen des oder der Sendesignals/e aufweisen.

Die Vorrichtung 200 kann beispielsweise in einem PLC Modem angeordnet sein oder ein PLC Modem darstellen, wobei der Anschluss 201 beispielsweise zum Anschließen des PLC Modems an ein Stromversorgungsnetz eingerichtet sein kann, so dass eine PLC Datenkommunikation über diesen Anschluss 201 erfolgen kann. Beispielsweise kann der Anschluss 201 einen Netzstecker darstellen oder mit einem Netzstecker verbunden sein.

Die Datenkommunikation über die Stromleitungen des Stromversorgungsnetz kann bidirektional erfolgen, d.h. die Kommunikationsmittel 210 können mit den Empfangsmittel 212 Signale empfangen und die Kommunikationsmittel 210 können mit den Sendemitteln 211 Signale senden.

Die Datenkommunikation kann auf einem Frequenzmultiplexverfahren beruhen, wie beispielsweise einem OFDM-Verfahren, wobei eine Mehrzahl von Signalen in einer Mehrzahl von verschiedenen Frequenzbändern übertragen werden kann.

Beispielsweise kann die Vorrichtung 200 während einer Datenkommunikation, also einer PLC Datenkommunikation, über die Empfangsmittel 212 ein Signal in einem Überwachungsfrequenzband empfangen. Bei dem Überwachungsfrequenzband kann es sich um ein Frequenzband, welches nicht zur PLC Kommunikation verwendet wird, handeln.

Wie beispielhaft in Schritt 120 dargestellt ist, wird festgestellt, ob während mindestens einer ersten Stromnetzperiode eine Störkomponente in einem Signal eines Überwachungsfrequenzbands aufgetreten ist. Dieses Feststellen kann beispielsweise durch die Detektionsmittel 220 erfolgen.

Die Störkomponente kann beispielsweise ein Intermodulationsprodukt sein. Es ist festgestellt worden, dass das PLC Frequenzspektrum an einem nichtlinearen Bauelement gespiegelt werden kann. Beispielhafte und nicht abschließende nichtlineare Bauelemente sind Schaltnetzteile und Energiesparlampen. Derartige durch eine Spiegelung hervorgerufene Störkomponenten werden auch Intermodulationsprodukte genannt. Intermodulationsprodukte erhöhen in anderen Nutzfrequenzbänder, beispielsweise dem FM Frequenzband, das Rauschen und stören damit beispielsweise Radiosender.

Beispielsweise kann das Festellen einer Störkomponente durch Auswerten der Amplitude des Signals in dem Überwachungsfrequenzband erfolgen. Die Amplitudenwerte können durch geeignete Mittel, wie Abtastmittel, erfasst werden. Beispielsweise kann festgestellt werden, ob die Amplitudenwerte während der ersten Stromnetzperiode zeitweise (stark) ansteigen. Um einen Anstieg und/oder ein Abfallen der Amplitudenwerte zu detektieren, können die Detektionsmittel 220 beispielsweise eingerichtet sein, eine Differenzierungsoperation über die Amplitudenwerte durchzuführen. Die Ergebnisse dieser Operation können mit mindestens einem vordefinierten Grenzwert verglichen werden. Übersteigen die Ergebnisse den Grenzwert, so wird eine Störkomponente festgestellt. Wird der Grenzwert nicht überschritten, wird keine Störkomponente detektiert.

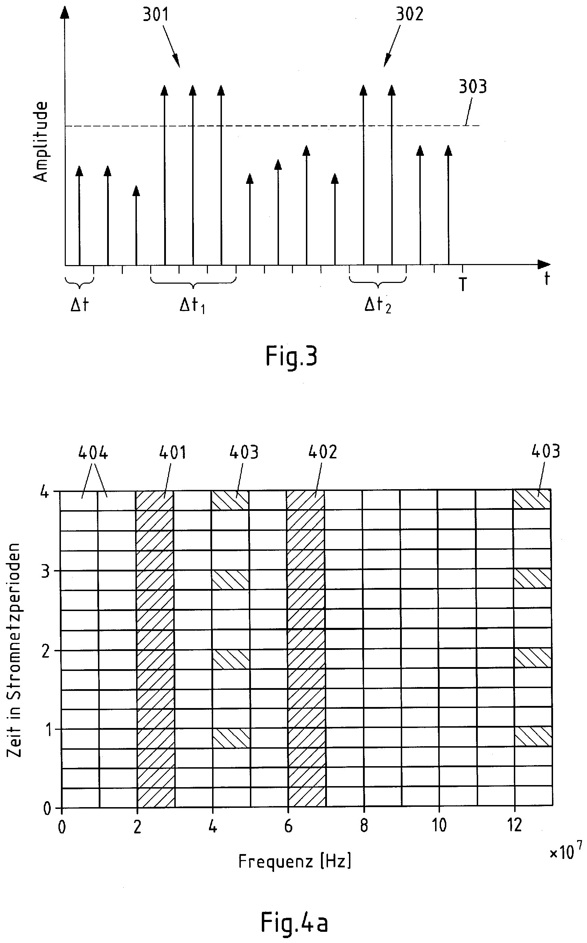

Ein beispielhafter Amplitudenverlauf eines Signals innerhalb einer Stromnetzperiode T ist in Figur 3 dargestellt. Zu erkennen ist, dass während einer Netzperiode T eine Mehrzahl von Amplitudenwerten auftritt. Diese können durch geeignete Mittel erfasst werden. Insbesondere kann die Stromnetzperiode in eine Vielzahl von m-Zeitspannen mit jeweils einer Länge von Δt unterteilt werden. Eine Amplitude kann dann in jeder dieser Zeitspannen erfasst werden. Beispielsweise kann eine Zeitspanne Δt einer Symboldauer (z.B. 40,96 µs) entsprechen. Es versteht sich, dass auch ein Vielfaches einer Symboldauer für eine Zeitspanne Δt festgelegt werden kann.

Ferner ist in der Figur 3 ein beispielhafter Grenzwert 303 abgebildet. In Abhängigkeit des Grenzwerts 303 kann eine Störkomponente festgestellt werden. Liegen die Amplitudenwerte über dem Grenzwert 303, so liegt eine Störkomponente vor. Wenn die Amplitudenwerte unterhalb des Grenzwerts 303 liegen, ist in diesem Zeitraum keine Störkomponente vorhanden.

Im vorliegenden Ausführungsbeispiel ist eine erste Störkomponente 301 für die Auftrittszeitdauer Δt₁ und eine weitere Störkomponente 302 für eine weitere Auftrittszeitdauer Δt₂ aufgetreten.

Wie bereits beschrieben wurde, können die Amplitudenwerte auch einer Differenzierungsoperation unterzogen werden und dann diese Ergebnisse mit einem Grenzwert verglichen werden. Auch in diesem Fall würden die Störkomponenten 301 und 302 aufgrund des ersichtlich starken Anstiegs/Abfalls der Amplitudenwerte festgestellt werden.

In Schritt 130 wird dann mindestens eine Auftrittszeitdauer der zumindest einen Störkomponente während der ersten Stromnetzperiode bestimmt. Beispielsweise wird diese Bestimmung mittels der Bestimmungsmittel 230 durchgeführt. Die Bestimmungsmittel können die Auftrittszeitdauer Δt₁ bzw. Δt₂, insbesondere den Startzeitpunkt und den Endzeitpunkt einer Störkomponente 301, 302 während der Stromnetzperiode T erfassen.

Nach der Bestimmung der Auftrittszeitdauer der zumindest einen Störkomponente während der ersten Stromnetzperiode wird in Schritt 140 eine Sendeleistung in mindestens einem Frequenzband zumindest für die bestimmte Auftrittszeitdauer in mindestens einer nachfolgenden Stromnetzperiode abgesenkt. Vorzugsweise können komplette Frequenzbereich, z.B. 2 bis 30 MHz und/oder 30 bis 83 MHz abgesenkt werden. Insbesondere wird die Sendeleistung ausschließlich für die bestimmte Auftrittszeitdauer in mindestens einer nachfolgenden Stromnetzperiode abgesenkt.

Dieses Absenken kann beispielsweise durch die Mittel zum Absenken einer Sendeleistung 240 durchgeführt werden. Die Mittel zum Absenken einer Sendeleistung 240 können hierzu beispielsweise in Wirkverbindung mit den Sendemitteln 211 stehen.

Das Absenken der Sendeleistung in dem zumindest einem Frequenzband kann beispielsweise das Unterlassen des Sendens in dem zumindest einem Frequenzband und/oder das Filtern eines Sendesignals in dem zumindest einem Frequenzband umfassen. So kann das Absenken der Sendeleistung in zumindest einem Frequenzband beispielsweise das Verringern der Sendeleistung in dem jeweiligen Frequenzband um einen vorgegebenen oder bestimmbaren Absenkungsfaktor umfassen, wobei dieser Absenkungsfaktor beispielsweise zwischen 0 und 1 liegen kann. Für den Fall, dass der Absenkungsfaktor 0 beträgt, kann beispielsweise das Senden in dem zumindest einem Frequenzband von der Vorrichtung 200 unterlassen werden. Die Sendeleistung wird in diesem Fall in diesem zumindest einem Frequenzband zumindest für die bestimmte Auftrittszeitdauer auf Null abgesenkt. Ist der Absenkungsfaktor beispielsweise 1, so erfolgt keine Absenkung der Sendeleistung. In einem einfachen Fall kann der Absenkungsfaktor nur die Werte 0 und 1 annehmen. Es versteht sich, dass der Absenkungsfaktor darüber hinaus auch eine vorgebare Anzahl an Werten zwischen 0 und 1 annehmen kann.

Des Weiteren kann vorgesehen sein, dass der Absenkungsfaktor individuell vorgegeben oder bestimmt wird. Beispielsweise kann der Absenkungsfaktor derart gewählt sein, dass die in dem zumindest einen Frequenzband von der Vorrichtung 200 abgestrahlte Sendeleistung zu keinen Intermodulationsprodukten in anderen Nutzfrequenzbändern, wie beispielsweise Radiofrequenzbändern führt. Dies kann vor der Inbetriebnahme beispielsweise in Abhängigkeit von Tests vorgeben werden.

Eine besonders exakte Reduzierung der Sendeleistung ist insbesondere dann möglich, wenn der Absenkungsfaktor in Abhängigkeit der erfassten Störkomponente bestimmt wird. Dann ist es insbesondere möglich, die Sendeleistung nur in soweit abzusenken, wie es für eine Beseitigung der Störkomponente tatsächlich erforderlich ist. Beispielsweise kann bei der Feststellung, ob eine Störkomponente vorliegt, auch eine quantitative Auswertung der Störkomponente erfolgen. Beispielsweise kann der quantitative Unterschied zwischen einem Amplitudengrenzwert und einer erfassten Amplitude einer Störkomponente und/oder zwischen dem durch eine Differenzierungsoperation erhaltenen Wert und einem entsprechenden Grenzwert bei der Bestimmung des jeweiligen Absenkungsfaktors berücksichtigt werden.

Beispielsweise kann das Absenken der Sendeleistung durch eine geeignete Steuerungssoftware erfolgen. Alternativ kann entsprechend dem Absenkungsfaktor ein analoges oder digitales Signal erzeugt werden. Mittels dieses Signals kann beispielsweise ein Dämpfungsglied, wie ein digitales oder analoges Dämpfungsglied, geschaltet werden. Auch kann das Absenken der Sendeleistung durch ein optionales einstellbares Filter erzielt werden.

Es versteht sich, dass die Vorrichtung 200 auch eine Messvorrichtung sein kann, um beispielsweise vor Inbetriebnahme eines PLC Geräts den Einfluss verschiedener insbesondere nichtlinearer Bauelemente eines Stromversorgungsnetzes entsprechend den vorherigen Ausführungen zu messen.

In Feldtests können ein oder mehrere PLC-Gerät/e die Auswirkungen von einem oder mehreren nichtlinearen Bauelementen für eine Mehrzahl von PLC Frequenzbändern und Überwachungsfrequenzbändern in zuvor beschriebener Weise durchgeführt werden. Der Labortest oder aber auch Feldtest kann vorsehen, dass in der Nähe der PLC Modems Geräte eingesteckt werden, die nichtlineare Bauteile umfassen. Das sind z.B. die Dioden von Brückengleichrichtern. Da die Intermodulationsprodukte zu bestimmten "festen" Zeiten auftreten, u.a. ein wenig abhängig von der Last, kann dies statistisch ausgewertet und eine Master-Absenkungsfaktortabelle erstellt werden.

Vorzugsweise kann eine Absenkungsfaktortabelle für zumindest ein PLC Frequenzband, insbesondere eine Mehrzahl von PLC Frequenzbändern f_{B1} bis f_{Bn} für eine Stromnetzperiode T erzeugt werden. Vorzugsweise kann die Stromnetzperiode T in eine Vielzahl von m-Zeitspannen unterteilt werden. Beispielsweise kann eine Zeitspanne Δt einer Symboldauer (z.B. 40,96 µs) entsprechen. Es versteht sich, dass auch ein Vielfaches einer Symboldauer für eine Zeitspanne festgelegt werden kann.
Für das mindestens erste Frequenzband kann für jeden der m-Zeitspannen jeweils ein Absenkungsfaktor in Abhängigkeit der mindestens einen bestimmten Auftrittszeitdauer bestimmt werden. Bei einer Stromnetzperiode von 20 ms und einer Zeitspanne von 40,96 µs werden beispielsweise 488 Absenkungsfaktoren pro Frequenzband bestimmt. Eine beispielhafte Absenkungsfaktortabelle ist nachfolgend abgebildet.

| | t₀ bis t₁ | t₁ bis t₂ | ... | tₘ bis T |
|---|---|---|---|---|
| f_{B1} | 1 | 0,5 | ... | 1 |
| f_{B2} | 0,25 | 1 | ... | 1 |
| ... | ... | ... | ... | ... |
| f_{Bn} | 0,5 | 0 | ... | 1 |

Diese Absenkungsfaktortabelle kann insbesondere in einem optionalen Speichermittel 270, insbesondere einem Schreib-Lese-Speicher, gespeichert werden. Die Mittel 240 zum Absenken einer Sendeleistung können eingerichtet sein, die Absenkungsfaktortabelle aus dem Speichermittel 270 auszulesen und die Sendeleistung entsprechend den Werten der Absenkungsfaktortabelle abzusenken.

Das Absenken selber kann über verschiedene Wege erfolgen. Zum Beispiel kann eine interne softwaremäßige Einstellung der Amplitude erfolgen. Alternativ oder zusätzlich kann die Sendeleistung über die Verstärkungseinstellung in der AGC (Automatic gain control) manipuliert werden. Alternativ oder zusätzlich kann außerhalb des PLC-Chips per einstellbarem Dämpfungsglied, welches (digital oder analog) implementiert sein kann, die Amplitude um den gewünschten Wert reduziert werden.

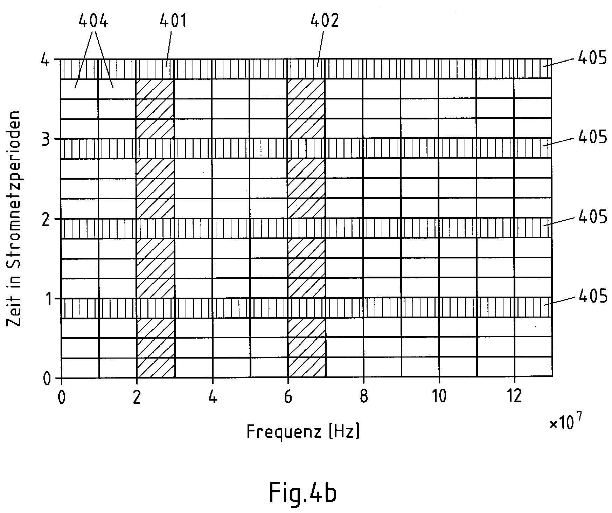

Die Figuren 4a und 4b zeigen ein Frequenzspektrum ohne (Fig. 4a) und mit (Fig. 4b) Anwendung des zuvor beschriebenen Verfahrens. Hierbei liegt ein hoher Signalpegel in den mit 401 und 402 bezeichneten Bereichen (schraffiert von links unten nach rechts oben) vor. Diese entsprechen insbesondere PLC Sendeleistungen. In den nicht schraffierten Bereichen (Bezugszeichen 404) liegt im Wesentlichen nur ein (natürliches) Rauschen vor. Die mit 403 bezeichneten Flächen(schraffiert von rechts unten nach links oben) sind Störkomponenten, die oberhalb des (natürlichen) Rauschens liegen.

Aus Figur 4a ist zu erkennen, dass die Störkomponenten 403, insbesondere Intermodulationsprodukte, synchron während einer Stromnetzperiode auftreten. Aus Figur 4b kann entnommen werden, dass die Störkomponenten aus der Figur 4a nicht mehr auftreten. Insbesondere ist in den mit 405 bezeichneten Flächen (schraffiert von unten nach oben) die Sendeleistung (ausreichend) abgesenkt.

Ferner arbeiten PLC Vorrichtungen 200, wie PLC Modems, (in der Regel) synchron zur Stromnetzperiode. Mit anderen Worten ist die genaue Dauer einer Stromnetzperiode der PLC Vorrichtung 200 bekannt.

Wie bereits beschrieben wurde, kann die Absenkungsfaktortabelle vor der Inbetriebnahme erstellt werden. Alternativ oder zusätzlich kann die Absenkungsfaktortabelle auch während des Betriebs eines PLC Geräts 200, also dynamisch, erstellt und/oder aktualisiert werden, wie nachfolgend ausgeführt wird.

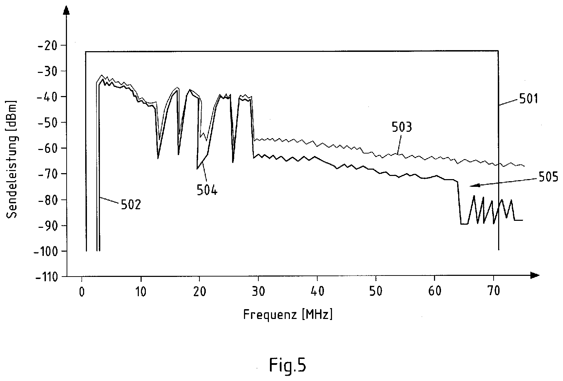

Figur 5 zeigt ein beispielhaftes PLC Frequenzspektrum. Zu erkennen ist zunächst, dass das PLC Frequenzspektrum (sehr) breitbandig ist. Dies hat zur Folge, dass auch die Störkomponenten, insbesondere die Intermodulationsprodukte, breitbandig sein können.

PLC Vorrichtungen 200, wie ein PLC Modem, verfügen über einen Bandpass, um das Nutzfrequenzband zu filtern. In Figur 5 ist ein idealisierter Bandpass 501 abgebildet. Ferner ist beispielhaft ein PLC Frequenzspektrum 502 und ein Interferenzspektrum 503 dargestellt. Zur Feststellung, ob Störkomponenten, wie Intermodulationsprodukte, im FM Frequenzband beispielsweise aufgrund von nichtlinearen Bauelementen innerhalb des Stromversorgungsnetzes vorhanden sind, kann beispielsweise das Frequenzband in einem so genannten Notch als Überwachungsfrequenzband genutzt werden. Beispielhaft ist in Figur 5 der Amateurfunknotch 504 eingezeichnet. Es ist zu erkennen, dass sich PLC Frequenzspektrum 502 und das Interferenzspektrum 503 (quantitativ) deutlich von einander in dem Bereich 504 unterscheiden. Eine Detektion von Störkomponenten ist in einfacher Weise mit den ungenutzten Trägerfrequenzen des Amateurfunknotches 504 möglich.

Alternativ oder zusätzlich zu einem Notch kann auch die Amplitude von ungenutzten Trägerfrequenzen am Ende 505 des PLC-Frequenzspektrums genutzt werden. Insbesondere kann die zuvor beschriebene dynamische Detektion von Störkomponenten in einer PLC Vorrichtung 200 durchgeführt werden.

Nachdem Störkomponenten und ihr jeweiliger Auftrittszeitraum innerhalb einer Stromnetzperiode festgestellt und bestimmt wurden, kann wie zuvor beschrieben beispielsweise eine Absenkungsfaktortabelle erstellt werden und Mittel 240 zum Absenken einer Sendeleistung in mindestens einem PLC Frequenzband entsprechend angesteuert werden.

Wie bereits beschrieben wurde, sind Bauelemente, insbesondere nichtlineare Bauelemente, in einem Stromversorgungsnetz ein Grund für die Störkomponenten. Im Laufe der Betriebszeit ändert sich der Aufbau eines Stromversorgungsnetzes. Beispielsweise werden Bauelemente entfernt und/oder hinzugefügt. Insbesondere können neu hinzugefügte nichtlineare Bauelemente zu neuen Störkomponenten führen. Um neue Störkomponenten zu detektieren, kann während des laufenden Betriebs in vordefinierten Zeitabständen ein Überwachungsschritt durchgeführt werden.

Eine PLC Vorrichtung 200 kann dazu eingerichtet sein, die Amplituden eines Frequenzbands, insbesondere von jedem einzelnen Träger, individuell einzustellen. Wie beispielsweise in Figur 5 zu erkennen ist, kann bei derzeit eingesetzten PLC Vorrichtung die Sendeleistung bzw. der Sendepegel im Bereich zwischen 30 MHz und 67,5 MHz niedriger eingestellte sein, als im Bereich kleiner 30 MHz.

Um Festzustellen, ob im laufenden Betrieb eine neue Störkomponente beispielsweise aufgrund eines hinzugefügten Schaltnetzteil oder dergleichen aufgetreten ist, kann ein Testträger, insbesondere ein niederfrequenter Testträger (< 10 MHz), erzeugt werden. Hierzu kann eine PLC Vorrichtung entsprechende Testträgererzeugungsmittel 280 aufweisen.

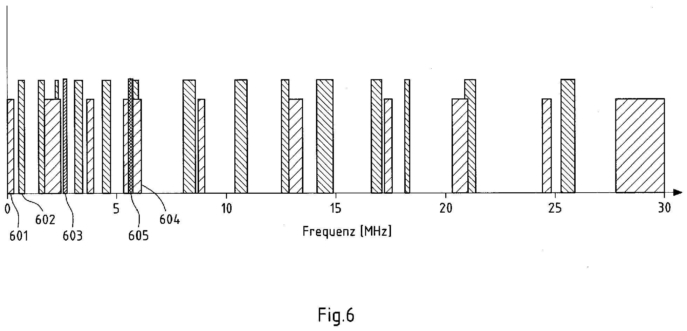

Figur 6 zeigt ein beispielhaftes Frequenzspektrum mit einem Testträger 603. Hierbei bezeichnet das Bezugszeichen 601 dynamische Notchfrequenzen und Bezugszeichen 602 permanente Notchfrequenzen. Beispielsweise kann der Testträger 603 bei 3 MHz erzeugt werden. Dann kann vorteilhafter Weise die Amplitude der ersten Oberwelle 605 bei 6 MHz, welche innerhalb des nicht genutzten Amaterufunkbandes 604 liegt, zum Festellen von Störkomponenten genutzt werden. Ein weiterer Vorteil eines Testträgers bei 3 MHz ist, dass evtl. Intermodulationsprodukte bzw. die Oberwellen sich vor Erreichen des FM Frequenzbands ausreichend abgeschwächt haben. Daher ist es möglich, den Testträger bei 3 MHz mit einer hohen Sendeleistung dauerhaft, also in jeder Stromnetzperiode, zu senden. Eine zeitnahe Detektion von neu aufgetretenen Störkomponenten ist möglich. Auch kann der Testträger derart angepasst werden, dass andere Nutzfrequenzbänder, wie Kurzwellenfrequenzbänder oder Amateurfunkfrequenzbänder, geschützt werden.

Wird das 3 MHz Testsignal beispielsweise alle 0,5 ms ein und ausgeschaltet so kann dann die Amplitude des Signals bei 6 MHz gemessen und ausgewertet werden. Insbesondere kann festgestellt werden, ob sich das Signal bei 6 MHz in diesen Zeitabständen verändert hat. Wenn es sich geändert hat, dann liegt ein Intermodulationsprodukt vor. Wenn es sich nicht geändert hat, liegt keine Störkomponente vor.

Ein Stromversorgungsnetz kann über zwei oder mehr PLC Vorrichtungen 200 verfügen. Eine PLC Vorrichtung 200 kann optional zweite Kommunikationsmittel 250 aufweisen, um mit mindestens einer weiteren PLC Vorrichtung 200 zu kommunizieren. Die Kommunikation zwischen mindestens zwei PLC Vorrichtung 200 kann über Stromleitungen und/oder andere Datenleitungen und/oder drahtlos erfolgen. Für die Kommunikation kann ein Management Protokoll genutzt werden. Beispielsweise können die zweiten Kommunikationsmittel 250 zum Austauschen von MMEs eingerichtet sein. Mittels dieser MMEs können die zweiten Kommunikationsmittel 250 insbesondere den mindestens einen Absenkungsfaktor, vorzugsweise die Absenkungsfaktormaske bzw. Absenkungsfaktortabelle, aussenden und/oder empfangen. Welche PLC Vorrichtung 200 nun tatsächlich die Sendeleistung reduziert ist ggf. eine Konfigurationsoption, die mittels der Steuerungsmittel 260 verwaltet und umgesetzt werden kann.

Für einen maximalen Schutz kann vorgesehen sein, dass sämtliche PLC Vorrichtungen 200 die Sendeleistung reduzieren. Für eine maximale Leistung kann vorgesehen sein, dass die Sendeleistung nur dann reduziert wird, wenn an beiden/allen PLC Vorrichtungen 200 Störkomponenten aufgetreten sind. Alternative kann vorgesehen sein, dass nur die PLC Vorrichtung 200 die Sendeleistung reduziert, bei der die Störkomponente detektiert wurde.

## Patentansprüche

1. Verfahren, umfassend:
- Durchführen einer Kommunikation über mindestens eine Stromleitung eines Stromversorgungsnetzes unter Verwendung von mindestens einem Frequenzband (110);
- Feststellen, ob während mindestens einer ersten Stromnetzperiode eine Störkomponente (403) in einem Signal eines Überwachungsfrequenzbands aufgetreten ist (120);
- wobei das Frequenzband sich von dem Überwachungsfrequenzband unterscheidet;
**dadurch gekennzeichnet, dass** das Verfahren ferner umfasst:
- Bestimmen mindestens einer Auftrittszeitdauer (130), jeweils umfassend eine Start- und Endzeit, der zumindest einen Störkomponente (403) während der ersten Stromnetzperiode; und
- Absenken einer Sendeleistung in mindestens einem Frequenzband zumindest für die bestimmte Auftrittszeitdauer in mindestens einer nachfolgenden Stromnetzperiode (140), wobei
- das Bestimmen mindestens einer Auftrittszeitdauer der zumindest einen Störkomponente (403) das Erfassen der Amplitude des Signals in dem Überwachungsfrequenzband umfasst, und
- das Feststellen, ob während mindestens einer ersten Stromnetzperiode eine Störkomponente (403) in einem Signal eines Überwachungsfrequenzbands aufgetreten ist, in Abhängigkeit eines vordefinierten Grenzwerts und der erfassten Amplitude erfolgt; und wobei
- die Stromnetzperiode in eine Vielzahl von m-Zeitspannen unterteilt ist, und
- das Verfahren das Bestimmen eines Absenkungsfaktors in Abhängigkeit der mindestens einen bestimmten Auftrittszeitdauer für das mindestens eine Frequenzband für mindestens eine der m-Zeitspannen der Stromnetzperiode umfasst; wobei
- der mindestens eine Absenkungsfaktor in einem Speichermittel in einer PLC Vorrichtung gespeichert wird,
- der mindestens eine Absenkungsfaktor während des Betriebs der PLC-Vorrichtung in vorgebbaren Zeiträumen aktualisiert wird, und wobei
- mindestens ein niederfrequenter Testträger, welcher ein Signal < 10 MHz ist, in vorgebbaren Zeiträumen erzeugt wird,
- wobei zumindest die erste Oberwelle des Testträgers zum Feststellen einer Störkomponente (403) und zum Bestimmen einer Auftrittszeitdauer überwacht wird, und
- bei Feststellung einer Störkomponente (403) mindestens ein Absenkungsfaktor aktualisiert wird.

2. Verfahren nach Anspruch 1, **dadurch gekennzeichnet, dass**
- das Verfahren das Erfassen der Amplituden des Signals in dem Überwachungsfrequenzband von jeder der m-Zeitspannen umfasst.

3. Verfahren nach Anspruch 1,umfassend
- das Bestimmen der quantitativen Differenz zwischen der erfassten Amplitude der Störkomponente (403) und des vordefinierten Grenzwerts, und
- das Bestimmen des mindestens einen Absenkungsfaktors in Abhängigkeit der quantitativen Differenz.

4. Verfahren nach einem der vorherigen Ansprüche, **dadurch gekennzeichnet, dass**
- das Überwachungsfrequenzband in Abhängigkeit eines nicht zur PLC Kommunikation verwendeten Nutzfrequenzbandes gewählt wird,
- wobei die Frequenzen f_{UE} des Überwachungsfrequenzbandes zu den Frequenzen f_{NU} des Nutzfrequenzbandes folgende Beziehung zueinander aufweisen f_{UE} = (1/n) * f_{NU} mit n=2, ...N.

5. Verfahren nach einem der vorherigen Ansprüche, **dadurch gekennzeichnet, dass**
- das Feststellen, ob während mindestens einer ersten Stromnetzperiode eine Störkomponente (403) in einem Signal eines Überwachungsfrequenzbands aufgetreten ist, von einer PLC-Vorrichtung während dem laufenden Betrieb durchgeführt wird,
- wobei das Überwachungsfrequenzband ein im PLC Frequenzspektrum nicht genutztes Frequenzband ist.

6. Verfahren nach einem der vorherigen Ansprüche 1 bis 4, **dadurch gekennzeichnet, dass**
- das Überwachungsfrequenzband ein im PLC Frequenzspektrum für die Datenkommunikation genutztes Frequenzband ist, und
- zum Feststellen einer Störkomponente (403) das Signal-zu-Rauschverhältnis des Signals in dem für die Datenkommunikation genutzten Frequenzband erfasst wird und der Wert des Signal-zu-Rauschverhältnisses mit einem vordefinierten Grenzwert verglichen wird.

7. Verfahren nach Anspruch 1, **dadurch gekennzeichnet, dass**
- der mindestens eine gespeicherte Absenkungsfaktor an mindestens eine weitere PLC Vorrichtung (200) gesendet wird, und/oder
- mindestens ein Absenkungsfaktor von mindestens einer weiteren PLC Vorrichtung (200) empfangen wird,
- wobei der empfange Absenkungsfaktor in dem Speichermittel abgespeichert wird.

8. Verfahren nach Anspruch 7, **dadurch gekennzeichnet, dass**
- bei Feststellung einer Störkomponente (403) jede der mindestens zwei PLC Vorrichtungen (200) die Sendeleistung zumindest in dem einen Frequenzband absenkt, oder
- bei Feststellung einer Störkomponente (403) nur eine der mindestens zwei PLC Vorrichtungen die Sendeleistung zumindest in dem einen Frequenzband absenkt.

9. Verfahren nach einem der Ansprüche 7 oder 8, **dadurch gekennzeichnet, dass**
- bei Feststellung einer Störkomponente (403) nur die PLC Vorrichtung (200) von den mindestens zwei PLC Vorrichtungen (200) die Sendeleistung zumindest in dem einen Frequenzband absenkt, bei der die Störkomponente (403) festgestellt wurde.

10. PLC-Vorrichtung (200), umfassend:
- Kommunikationsmittel (210) zum Durchführen einer Kommunikation über mindestens eine Stromleitung eines Stromversorgungsnetzes unter Verwendung von mindestens einem Frequenzband;
- Detektionsmittel (220) zum Feststellen, ob während mindestens einer ersten Stromnetzperiode eine Störkomponente (403) in einem Signal eines Überwachungsfrequenzbands aufgetreten ist;
- wobei das Frequenzband sich von dem Überwachungsfrequenzband unterscheidet;
**dadurch gekennzeichnet, dass** die Vorrichtung ferner umfasst:
- Bestimmungsmittel (230) zum Bestimmen mindestens einer ersten Auftrittszeitdauer, jeweils umfassend eine Start- und Endzeit, der zumindest einen Störkomponente (403) während der ersten Stromnetzperiode; und
- Mittel zum Absenken einer Sendeleistung (240) in mindestens einem Frequenzband zumindest für die bestimmte Auftrittszeitdauer in mindestens einer nachfolgenden Stromnetzperiode; wobei
- die Stromnetzperiode in eine Vielzahl von m-Zeitspannen unterteilt ist, und die Vorrichtung ferner umfasst:
- Erfassungsmittel zum Erfassen der Amplituden des Signals in dem Überwachungsfrequenzband von jeder der m-Zeitspannen umfasst,
- Speichermittel (270), welche dazu eingerichtet sind, den mindestens einen Absenkungsfaktor zu speichern, wobei der mindestens eine Absenkungsfaktor während des Betriebs der PLC-Vorrichtung in vorgebbaren Zeiträumen aktualisiert wird und
- Testträgererzeugungsmittel (280), welche dazu eingerichtet sind, mindestens einen niederfrequenten Testträger, welcher ein Signal < 10 MHz ist, in vorgebbaren Zeiträumen zu erzeugen;
- wobei Detektionsmittel (220) dazu eingerichtet sind, zumindest die erste Oberwelle des Testträgers zum Feststellen einer Störkomponente (403) und zum Bestimmen einer Auftrittszeitdauer zu überwachen, und
- wobei die Vorrichtung (200) dazu eingerichtet ist bei Feststellung einer Störkomponente (403) mindestens einen Absenkungsfaktor zu aktualisieren.

11. System, umfassend eine Vorrichtung nach Anspruch 10 und mindestens eine weitere Vorrichtung nach Anspruch 10.

## Claims

1. A method, comprising:
- execution of a communication over at least one power line of a power supply network using at least one frequency band (110);
- ascertainment as to whether an interference component (403) has occurred during a least a first power supply network period in a signal of a monitoring frequency band (120); wherein
- the frequency band differs from the monitoring frequency band;
**characterised in that**, the method further comprises:
- determination of at least one occurrence time period (130), in each case comprising a start and end time, of the at least one interference component (403) during the first power supply network period; and
- reduction of a transmission power in at least one frequency band, at least for the occurrence time period determined, in at least one subsequent power supply network period (140), wherein
- the determination of at least one occurrence time period of the at least one interference component (403) comprises the detection of the amplitude of the signal in the monitoring frequency band, and
- the ascertainment as to whether an interference component (403) has occurred in a signal of a monitoring frequency band during at least a first power supply network period, takes place depending on a predefined threshold value and the amplitude detected; and wherein
- the power supply network period is subdivided into a plurality of m-time periods, and
- the method comprises the determination of a reduction factor depending on the at least one occurrence time period determined for the at least one frequency band for at least one of the m-time periods of the power supply network period; wherein
- the at least one reduction factor is stored in a means of storage in a PLC device,
- the at least one reduction factor is updated during predefinable time periods during the operation of the PLC device, and wherein
- at least one low-frequency test carrier, which is a signal <10 MHz, is generated in predefinable time periods, wherein
- at least the first harmonic of the test carrier is monitored for purposes of ascertaining an interference component (403), and for purposes of determining an occurrence time period, and
- in the event that an interference component (403) is ascertained, at least one reduction factor is updated.

2. The method in accordance with claim 1, **characterised in that**,
- the method comprises the detection of the amplitudes of the signal in the monitoring frequency band of each of the m-time periods.

3. The method in accordance with claim 1, comprising
- the determination of the quantitative difference between the detected amplitude of the interference component (403) and the predefined threshold value, and
- the determination of the at least one reduction factor depending on the quantitative difference.

4. The method in accordance with one of the preceding claims, **characterised in that**,
- the monitoring frequency band is selected depending on a operating frequency band not used for purposes of PLC communication, wherein
- the frequencies f_{UE} of the monitoring frequency band have the following relationship to the frequencies f_{NU} of the operating frequency band: f_{UE} = (1/n) * f_{NU} where n = 2, ...N.

5. The method in accordance with one of the preceding claims, **characterised in that**,
- the ascertainment as to whether an interference component (403) has occurred in a signal of a monitoring frequency band during at least a first power supply network period is executed by a PLC device during the ongoing operation, wherein
- the monitoring frequency band is a frequency band that is not used in the PLC frequency spectrum.

6. The method in accordance with one of the preceding claims 1 to 4, **characterised in that**,
- the monitoring frequency band is a frequency band that is used in the PLC frequency spectrum for data communication, and
- for purposes of ascertaining an interference component (403) the signal-to-noise ratio of the signal in the frequency band used for data communication is determined, and the value of the signal-to-noise ratio is compared with a predefined threshold value.

7. The method in accordance with claim 1, **characterised in that**,
- the at least one stored reduction factor is transmitted to at least one other PLC device (200), and/or
- at least one reduction factor is received by at least one other PLC device (200), wherein
- the received reduction factor is stored in the means of storage.

8. The method in accordance with claim 7, **characterised in that**,
- in the event of ascertaining an interference component (403), each of the at least two PLC devices (200) reduces the transmission power, at least in the one frequency band, or
- in the event of ascertaining an interference component (403), only one of the at least two PLC devices reduces the transmission power, at least in the one frequency band.

9. The method in accordance with one of the claims 7 to 8, **characterised in that**,
- in the event of ascertaining an interference component (403), only the PLC device (200) of the least two PLC devices (200), in which the interference component (403) has been ascertained, reduces the transmission power, at least in the one frequency band.

10. A PLC device (200), comprising:
- communication means (210) for performing a communication over at least one power line of a power supply network using at least one frequency band;
- detection means (220) for ascertaining as to whether an interference component (403) has occurred in a signal of a monitoring frequency band during at least a first power supply network period; wherein
- the frequency band differs from the monitoring frequency band;
**characterised in that**, the device further comprises:
- determination means (230) for determining at least one occurrence time period, in each case comprising a start and end time, of the at least one interference component (403) during the first power supply network period; and
- means for reduction of a transmission power (240) in at least one frequency band, at least for the occurrence time period determined, in at least one subsequent power supply network period, wherein
- the power supply network period is subdivided into a multiplicity of m-time periods, and the device further comprises:
- measuring means for detecting the amplitudes of the signal in the monitoring frequency band of each of the m-time periods,
- storage means (270) configured to store the at least one reduction factor, wherein the at least one reduction factor is updated in predefinable time periods during the operation of the PLC device, and
- test carrier generation means(280) configured to generate at least one low-frequency test carrier, which is a signal <10 MHz, in predefinable time periods; wherein
- the detection means (220) are equipped for purposes of monitoring at least the first harmonic of the test carrier for purposes of ascertaining an interference component (403), and for purposes of determining an occurrence time period, and wherein
- the device (200) is configured to update at least one reduction factor in the event that an interference component (403) is ascertained.

11. A system, comprising a device in accordance with claim 10, and at least one further device in accordance with claim 10.

## Revendications

1. Procédé comprenant :
- la réalisation d'une communication par l'intermédiaire d'au moins une ligne de courant d'un réseau d'alimentation en courant, en utilisant au moins une bande de fréquences (110),
- la détermination si un composant perturbant (403) est apparu dans un signal d'une bande de fréquences de surveillance pendant au moins une première période de réseau de courant (120),
- sachant que la bande de fréquences diffère de la bande de fréquences de surveillance,
**caractérisé en ce que** le procédé comprend en plus
- la détermination d'au moins une durée de l'apparition (30) avec chaque fois un moment de début et un moment de fin de l'apparition de l'au moins un composant perturbant (403) pendant la première période de réseau de courant, et
- l'abaissement d'une puissance d'émission dans au moins une bande de fréquences tout au moins pour la durée de l'apparition déterminée dans au moins une période de réseau de courant suivante (140), sachant que
- la détermination d'au moins une durée d'apparition de l'au moins un composant perturbant (403) comprend la saisie de l'amplitude du signal dans la bande de fréquences de surveillance, et que
- la détermination si un composant perturbant (403) est apparu dans un signal d'une bande de fréquences de surveillance pendant au moins une première période de réseau de courant (120) est effectuée en fonction d'une valeur limite prédéterminée et de l'amplitude saisie, et sachant que
- la période de courant de réseau est divisée en une pluralité de m-périodes de temps, et que le procédé comprend la détermination du facteur d'abaissement en fonction de l'au moins une durée d'apparition déterminée pour l'au moins une bande de fréquences pour l'au moins l'une des m-périodes de temps de la période de courant de réseau, sachant
- que l'au moins un facteur d'abaissement est mémorisé dans un moyen de mémorisation, dans un dispositif PLC,
- que l'au moins un facteur d'abaissement est actualisé pendant le fonctionnement du dispositif PLC en espaces de temps pouvant être prédéterminés, et sachant
- qu'au moins un support de test à basse fréquence, qui est un signal < 10 MHz, est généré en espaces de temps pouvant être prédéterminés,
- qu'au moins la première onde supérieure du support de test pour la constatation d'un composant perturbant (403) et pour la détermination d'une durée d'apparition est surveillée, et
- que, lors de la constatation d'un composant perturbant (403) au moins un facteur d'abaissement est actualisé.

2. Procédé selon la revendication 1,
**caractérisé en ce que**
- le procédé comprend la saisie des amplitudes du signal dans la bande de fréquences de surveillance de chacune des m-périodes de temps.

3. Procédé selon la revendication 1, comprenant
- la détermination de la différence quantitative entre l'amplitude des composants perturbants (403) saisie et la valeur limite prédéfinie, et
- la détermination de l'au moins un facteur d'abaissement en fonction de la différence quantitative.

4. Procédé selon l'une des revendications précédentes,
**caractérisé en ce que**
- la bande de fréquences de surveillance est choisie en fonction d'une bande de fréquences utile, non utilisée pour la communication PLC,
- sachant que les fréquences f_{UE} de la bande de fréquences de surveillance et les fréquences f_{NU} de la bande de fréquences utile présentent par rapport les unes aux autres, la relation suivante : f_{UE} = (1/n)* f_{NU} avec n = 2,... N.

5. Procédé selon l'une des revendications précédentes,
**caractérisé en ce que**
- la détermination si un composant perturbant (403) est apparu dans un signal d'une bande de fréquences de surveillance au cours d'au moins une période de réseau de courant est exécutée par un système PLC pendant le fonctionnement,
- sachant que la bande de fréquences de surveillance est une bande de fréquences non utilisée dans le spectre de fréquences PLC.

6. Procédé selon l'une des revendications 1 à 4,
**caractérisé en ce que**
- la bande de fréquences de surveillance est une bande de fréquences utilisée dans le spectre de fréquences PLC pour la communication de données, et que
- pour la détermination d'un composant perturbant (403), le rapport signal à bruit du signal est saisi dans la bande de fréquences utilisée pour la communication de données et la valeur du rapport signal à bruit est comparée avec une valeur limite prédéfinie.

7. Procédé selon la revendication 1,
**caractérisé en ce que**
- l'au moins un facteur d'abaissement mémorisé est envoyé à au moins un autre système PLC (200) et / ou
- au moins un facteur d'abaissement est reçu par au moins un autre système PLC (200),
- sachant que le facteur d'abaissement reçu est mémorisé dans le moyen de mémorisation.

8. Procédé selon la revendication 7,
**caractérisé en ce que**
- lors de la constatation d'un composant perturbant (403), chacun des au moins deux dispositifs PLC (200) abaisse la puissance d'émission au moins dans l'une bande de fréquences.

9. Dispositif selon l'une des revendications 7 ou 8,
**caractérisé en ce que**
- lors de la constatation d'un composant perturbant (403), seulement l'un (200) des au moins deux dispositifs PLC (200) abaisse la puissance d'émission au moins dans l'une bande de fréquences dans laquelle le composant perturbant (403) a été constaté.

10. Dispositif PLC (200), comprenant :
- des moyens de communication (210) pour l'exécution d'une communication par l'intermédiaire d'au moins une ligne de courant d'un réseau d'alimentation en courant, en utilisant au moins une bande de fréquences,
- des moyens de détection (220) pour détecter si un composant perturbant (403) est apparu dans un signal d'une bande de fréquences de surveillance au cours d'au moins une première période de réseau de courant,
- sachant que la bande de fréquences diffère de la bande de fréquences de surveillance,
**caractérisé en ce que** le dispositif comprend de plus
- des moyens de détermination (230) pour déterminer au moins une première durée de l'apparition (30), avec chaque fois un moment de début et un moment de fin de l'apparition de l'au moins un composant perturbant (403) pendant la première période de réseau de courant, et
- des moyens pour abaisser une puissance d'émission (240) dans au moins une bande de fréquences, tout au moins pour la durée de l'apparition déterminée dans au moins une période de réseau de courant suivante, sachant que
- la période de courant de réseau est divisée en une pluralité de m-périodes de temps, et que le dispositif comprend de plus :
- des moyens de saisie pour la saisie des amplitudes du signal dans la bande de fréquences de surveillance de chacune des m-périodes de temps,
- des moyens de mémorisation (270) qui sont aménagés pour mémoriser l'au moins un facteur d'abaissement, sachant que l'au moins un facteur d'abaissement est actualisé pendant le fonctionnement du dispositif PLC en espaces de temps pouvant être prédéterminés, et
- des moyens de support de test /280), qui sont aménagés pour générer au moins un signal < 10 MHz à basse tension, dans des espaces de temps pouvant être prédéterminés,
- sachant que des moyens de détection (220) sont aménagés pour surveiller au moins la première onde supérieure du support de test pour la détection d'un composant perturbant (403) et pour la détermination d'une durée d'apparition, et
- sachant que le dispositif (200) est aménagé pour actualiser au moins un facteur d'abaissement lors de la constatation d'un composant perturbant (403).

11. Système comprenant un dispositif selon la revendication 10 et au moins un autre dispositif selon la revendication 10.
